Europäisches Patentamt

European Patent Office

Office européen des brevets

(11) Veröffentlichungsnummer: **0 373 350**

**A2**

## (12) EUROPÄISCHE PATENTANMELDUNG

(21) Anmeldenummer: **89120538.7**

(22) Anmeldetag: **07.11.89**

(51) Int. Cl.⁵: **H05B 3/26, H05B 1/02**

(30) Priorität: **12.12.88 DE 8815423 U**
**23.05.89 DE 8906375 U**

(43) Veröffentlichungstag der Anmeldung:
**20.06.90 Patentblatt 90/25**

(84) Benannte Vertragsstaaten:
**AT BE CH DE ES FR GB GR IT LI LU NL SE**

(71) Anmelder: **INTER CONTROL Hermann Köhler**
**Elektrik GmbH u. Co. KG**
**Schafhofstrasse 30**
**D-8500 Nürnberg 10(DE)**

(72) Erfinder: **Hollweck, Walter, Ing.**
**Laufer Weg 38**
**D-8501 Heroldsberg(DE)**

(74) Vertreter: **Hafner, Dieter, Dr.rer.nat.,**
**Dipl.-Phys.**
**Ostendstrasse 132**
**D-8500 Nürnberg 30(DE)**

(54) **Bauteil, insbesondere für den Einsatz als Heizwiderstand sowie Temperaturregelvorrichtung.**

(57) Die vorliegende Erfindung betrifft ein Bauteil insbesondere für den Einsatz als Heizwiderstand. Das erfindungsgemäße Bauteil umfaßt eine Trägerplatte (17), einen auf dieser Trägerplatte (17) aufgebrachten Schichtwiderstand (22), Anschlußelemente, welche mit dem Schichtwiderstand (22) in elektrischem Kontakt stehen sowie eine zusätzliche an der Trägerplatte (17) anliegende Isolierstoffschicht (31) zur thermischen Kapazitätserhöhung. Die Isolierstoffschicht (31) besitzt ein im Vergleich zur Trägerplatte (17) größeres Massevolumen und besteht vorzugsweise aus keramischen Material. Innerhalb des aus Trägerplatte (17) und Isolierstoffschicht (31) bestehenden Paketes ist eine Aufnahmeeinrichtung in Form einer schlitzförmigen Ausnehmung (34) an der Berührungsfläche von Trägerplatte (17) und Isolierstoffschicht (31) vorgesehen, wobei die Ausnehmung (34) insbesondere in die Isolierstoffschicht (31) hineinverläuft.

EP 0 373 350 A2

# Bauteil, insbesondere für den Einsatz als Heizwiderstand sowie Temperaturregelvorrichtung

Die Erfindung betrifft ein Bauteil, insbesondere für den Einsatz als Zusatzheizwiderstand.

Zusatzheizwiderstände finden im Bereich der Elektrotechnik ein breites Anwendungsgebiet. Insbesondere bei Temperaturregelvorrichtungen werden Zusatzheizwiderstände verwendet, um Heizzustände festzulegen bzw. zu simulieren.

Beispielsweise wird an der elektrisch beheizten Warmhalteplatte einer Kaffeemaschine eine Temperaturregelvorrichtung mit einem gattungsgemäßen Bauteil in Form eines Zusatzheizwiderstandes angeordnet, welche die Temperatur dieser Warmhalteplatte auf ca. 150° C regelt.

Das Bauteil bzw. hier der Zusatzheizwiderstand ist hierbei im Rahmen einer Zusatzschaltung vorgesehen, mit deren Hilfe eine Bedienungsperson beispielsweise zwischen der Einstellung "2 - 4 Tassen" einerseits und "5 - 12 Tassen" andererseits wählen kann, so daß insbesondere nicht vollständig gefüllte, auf der Warmhalteplatte stehende Kaffeekannen nicht überhitzt werden. Dieser manuelle einschaltbare, elektrische Zusatzheizwiderstand wirkt also im eingeschalteten Zustand als eine zusätzliche Heizung auf die Temperaturregelvorrichtung ein, wodurch diesem Temperaturregler gleichsam eine höhere Temperatur vorgespielt wird, als sie die Warmhalteplatte der Kaffeemaschine tatsächlich hat. Infolgedessen wird durch den Temperaturregler die tatsächliche Temperatur der Warmhalteplatte entsprechend abgesenkt.

Als Bauteile, insbesondere auch für den Einsatz als Heizwiderstände werden bisher gewickelte Keramikwiderstände verwendet, die eine Mittenausnehmung bzw. Bohrung haben, in denen ein Heizelement eingebettet ist. Insbesondere bei unterschiedlichem individuellen Bedarf, unterschiedlich benötigten Widerstandswerten etc. erweisen sich diese bekannten Keramikbauteile, besonders was die Fertigung anbelangt, als relativ aufwendig, was wiederum den Preis derartiger Bauteile negativ beeinflußt.

Der vorliegenden Erfindung liegt das Ziel zugrunde, ein Bauteil der gattungsgemäßen Art zu schaffen, welches eine einfache und kostengünstige Herstellung - auch unter dem Aspekt der kundenspezifischen Anforderungen -gewährleistet. Das Bauteil soll darüber hinaus einem automatisierten Herstellungsprozeß zugänglich sein.

Dieses Ziel wird durch ein Bauteil mit einer Trägerplatte, einem auf diese Trägerplatte aufgebrachten Schichtwiderstand. Anschlußelementen, welche mit dem Schichtwiderstand in elektrischem Kontakt stehen, sowie einer zusätzlichen an der Trägerplatte anliegenden Isolierstoffschicht zur thermischen Kapazitätserhöhung gelöst.

Der erfindungsgemäße schichtenförmige Aufbau des Bauteils gewährleistet den Vorteil, daß die neben der Trägerplatte vorgesehene Isolierstoffschicht, was die Festigkeit des Bauteils anbelangt - eine unterstützende Funktion oder Trägerfunktion aufweist. Darüber hinaus besitzt die Isolierstoffschicht die zusätzliche entscheidende Funktion, daß die durch den Schichtwiderstand erzeugte Wärme in der Isolierstoffschicht gespeichert werden kann, so daß die Schicht gleichsam als Wärmespeicher dient. Das Bauteil kann in einfacher Weise mit unterschiedlichen Widerstandswerten stückig vorgefertigt und als Massenartikel billig hergestellt werden. Darüber hinaus kann das Bauteil aufgrund des einfachen Aufbaus bzw. der einfachen Form in einfacher Weise mit unterschiedlichsten Geräten je nach Bedarf kombiniert werden.

Die Ansprüche 2 bis 15 betreffen zweckmäßige Ausgestaltungen des erfindungsgemäßen Bauteils.

Dadurch, daß gemäß der Ausgestaltung des Anspruches 2 die Isolierstoffschicht ein im Vergleich zur Trägerplatte größeres Massevolumen besitzt wird eine hohe Festigkeit sowie vorallem ein sehr gutes Wärmespeicherungsvermögen des Bauteils gewährleistet.

Die Herstellung der Isolierstoffschicht aus einem keramischen Material bietet den Vorteil des hohen Wärmespeichervermögens des keramischen Materials sowie der günstigen Rohstoffpreise und einfachen Herstellbarkeit der Isolierstoffschicht aus keramischem Material.

Werden gemäß einer weiteren zweckmäßigen Ausgestaltung des erfindungsgemäßen Bauteils Trägerplatte, Isolierstoffschicht sowie Anschlußelemente über ein gemeinsames Befestigungsmittel miteinander gehalten, ergibt sich der Vorteil der besonders schnellen Montage bzw. Fertigung, was sich wiederum in den Herstellungskosten des Bauteils günstig niederschlägt.

Dadurch, daß als Befestigungsmittel zwei Niete vorgesehen sind, welche die Anordnung von Trägerplatte, Isolierstoffschicht sowie Anschlußelemente durchsetzen, ergibt sich der Vorteil, daß die Befestigungsmittel neben der eigentlichen Befestigungsfunktion darüber hinaus auch gleichzeitig einen elektrischen Kontakt zwischen dem auf der Trägerplatte angeordneten Schichtwiderstand und den Anschlußelementen gewährleisten. Insofern kommt den Befestigungsmitteln in diesem Fall eine Doppelfunktion zu.

Dadurch, daß gemäß einer weiteren Ausgestaltung des erfindungsgemäßen Bauteils, eine Aufnahmeeinrichtung zur Aufnahme metallischer Wärmeübertragungselemente benachbarter Bauelemente vorgesehen ist, wird in einfacher Weise eine Wärmekopplung zwischen verschiedenen Bauelementen gewährleistet. Insbesondere kann hierdurch die am Bauteil entstehende Wärme auf ein wärmeansprechendes Schaltelement, beispielsweise einen Bimetallschalter übertragen werden.

Zweckmäßigerweise kann als Aufnahmeeinrichtung eine schlitzförmige Ausnehmung vorgesehen sein. In diese schlitzförmige Ausnehmung kann in einfacher Weise ein zungenförmiges Element eines benachbarten Bauelements eingreifen und eine Wärmekopplung herstellen. Zusätzliche Befestigungsmittel sind folglich überflüssig.

Als besonders zweckmäßig erweist es sich, wenn die Aufnahmeeinrichtung bzw. schlitzförmige Ausnehmung an der Berührungsfläche von Trägerplatte und Isolierstoffschicht vorgesehen ist. Insbesondere kann die Aufnahmeeinrichtung bzw. schlitzförmige Ausnehmung hierbei in die Isolierstoffschicht hineinverlaufen. Das zungenförmige Wärmekopplungsglied eines benachbarten Bauelements befindet sich dann in unmittelbarer Anlage an der schichtwiderstandtragenden Trägerplatte, so daß eine Wärmeableitung direkt von der Trägerplatte erfolgen kann.

Darüber hinaus besitzen die vorstehend bezeichneten Ausgestaltungen des erfindungsgemäßen Bauteils noch den zusätzlichen Vorteil, daß das zungenförmige Halteelement eines benachbarten Bauteils neben der eigentlichen Funktion der Wärmekopplung bzw. Wärmeübertragung die zusätzliche Funktion der Fixierung des Bauteils beinhaltet. Insofern kann auf zusätzliche Halte- oder Fixierungsmaßnahmen verzichtet werden.

Die Trägerplatte besteht vorzugsweise aus Keramik und hier insbesondere aus Aluminiumoxyd.

Eine außerordentlich günstige Ausbildung ergibt sich dann, wenn der Schichtwiderstand auf einer Oberfläche der Trägerplatte als Flächenwiderstand aufgedruckt ist. Ferner kann der Schichtwiderstand bzw. Flächenwiderstand zweckmäßigerweise jeweils mit endseitigen Kontaktflächen zur Kontaktgabe mit, beispielsweise als Kontaktfahnen ausgebildete Anschlußelemente der Trägerplatte versehen sein.

Diese Kontaktflächen bestehen vorzugsweise aus auf die Oberfläche der Trägerplatte aufgebrachtem Silber-Paladium (AgPd).

Ferner ist es günstig, wenn die Kontaktfahnen für den Schichtwiderstand jeweils Befestigungsabschnitte aufweisen, die im Bereich der Kontaktflächen des Schichtwiderstands durch Niete mit der Trägerplatte verbunden sind.

Im Falle, daß der als Zusatzheizwiderstand dienende Schichtwiderstand zu Anschlußelementen einer Temperaturregelvorrichtung parallelgeschaltet ist und damit bei geöffnetem Bimetall-Schalter zu dessen Überbrückung dient, sind gemäß einer weiteren Ausgestaltung vorteilhafterweise die Kontaktfahnen im Bereich gegenüberliegender Seitenkanten der Trägerplatte im wesentlichen rechtwinklig von ihren jeweiligen Befestigungsabschnitten ausgehend abgebogen und liegen mit ihren freien Enden an den Anschlußelementen der Temperaturregelvorrichtung berührungsdicht an.

Gemäß einer demgegenüber abgewandelten Ausführungsform der Erfindung ist anstelle einer Parallelschaltung des Schichtwiderstands vorgesehen, daß nur eine Kontaktfahne der Trägerplatte im wesentlichen rechtwinklig von ihrem Befestigungsabschnitt ausgehend abgebogen ist und mit ihrem freien Ende an dem einen Anschlußelement der Temperaturregelvorrichtung berührungsdicht anliegt, während die andere, gegenüberliegende Kontaktfahne von ihrem Befestigungsabschnitt ausgehend eine von der Temperaturregelvorrichtung wegführende Ausrichtung mit einem freien Ende zum Anschluß an einen manuell betätigbaren Schalter aufweist, der in einem abgezweigten Stromkreis liegt. Bei dieser abgewandelten Ausführungsform kann also die zusätzliche Beheizung durch den auf der Trägerplatte aufgebrachten Schichtwiderstand von einer Bedienungsperson manuell ein- oder ausgeschaltet werden, wodurch wiederum die Möglichkeit besteht, daß die Bedienungsperson beispielsweise bei einer Kaffeemaschine beispielsweise zwischen "2 - 4 Tassen" und "5 - 12 Tassen" beliebig wählen kann, derart, daß die Beheizung der Warmhalteplatte für die Kaffeekanne in entsprechender Weise über die Temperaturregelvorrichtung regelbar ist, wie dies an sich bereits bekannt ist.

Im Falle der zuletzt - beispielhaft für eine Kaffeemaschine - beschriebenen zusätzlichen Heizung erfolgt innerhalb des Kochbereiches gleichsam als Dioden-Leistungsteilerersatz eine Abschaltung, so daß die Leistungsteilung auf besonders vorteilhafte Weise erreicht wird. Nach dem eigentlichen Kochvorgang ist dann durch die gleiche Leistungstaktungsmaßnahme auch die Temperatur der Warmhalteplatte mit abgesenkt, da diese Temperatur ja bei einer nur halbgefüllten Kanne nicht so hoch sein soll wie bei einer vollgefüllten Kanne. Wenn die Leistung des Zusatzheizwiderstands geringer ausgelegt wird, so wird zwar während des Kochvorganges mit voller Leistung durchgekocht, in dem Moment allerdings, wo der Kochvorgang beendet ist, wird eine Leistungstaktung ausschließlich der Warmhalteplatte erreicht, was ebenfalls temperaturabsenkend wirkt.

Die vorliegende Erfindung betrifft weiterhin eine Temperaturregelvorrichtung mit einem an einem Isolierstoffkörper angeordneten, temperaturabhängig betätigbaren Bimetall-Schalter und einem Zusatzheizwiderstand, insbesondere für elektrische Hausgeräte, z. B. für Warmhalteplatten von Kaffeemaschinen oder dgl. Diese gattungsgemäße Temperaturregelvorrichtung ist dadurch gekennzeichnet, daß der Zusatzheizwiderstand als eine auf einer Trägerplatte aufgebrachter Schichtwiderstand ausgebildet ist und daß die Trägerplatte an dem Isolierstoffkörper angeordnet und mittels eines mit einem wärmeleitfähigen Basisteil der Temperaturregelvorrichtung einstückig verbundenen Halteelements gehaltert ist.

Ein zweckmäßige Ausgestaltung der erfindungsgemäßen Temperaturregelvorrichtung ist dadurch gekennzeichnet, daß als Zusatzheizwiderstand ein Bauteil gemäß mindestens einem der Ansprüche 1 - 15 vorgesehen ist und die Trägerplatte an dem Isolierstoffkörper angeordnet und mittels eines mit einem wärmeleitfähigen Basisteil der Temperaturregelvorrichtung einstückig verbundenen Halteelements gehaltert ist.

Bei der erfindungsgemäß ausgebildeten Temperaturregelvorrichtung ergibt sich insbesondere der Vorteil, daß der Zusatzheizwiderstand verhältnismäßig wenig Platz beansprucht, da die Trägerplatte mit Schichtwiderstand außerordentlich flach gehalten werden kann. Außerdem wird dadurch, daß die am Isolierstoffkörper angeordnete Trägerplatte mittels eines mit einem wärmeleitfähigen Basisteil der Temperaturregelvorrichtung einstückig verbundenen Halteelements gehaltert ist, im Falle der Bestromung des Schichtwiderstands auf der Trägerplatte und des hierdurch bewirkten, separaten Heizeffektes die vom Schichtwiderstand abgegebene Wärme unmittelbar über die Trägerplatte und das Halteelement in das Basisteil übergeleitet, so daß die Temperaturregelvorrichtung außerordentlich rasch auf die zusätzliche Beheizung anspricht.

Auf der anderen Seite ist es aufgrund der neuerungsgemäß ausgebildeten Temperaturregelvorrichtung und insbesondere aufgrund der relativ geringen Masse des Schichtwiderstands und dessen besonderer Wärmeankopplung nur an das Basisteil der Temperaturregelvorrichtung möglich, daß bei Abschaltung der Stromversorgung beispielsweise eines elektrischen Hausgerätes, wie etwa einer Kaffeemaschine, es zu einer sehr schnellen Abkühlung der Schichtwiderstands und damit auch des Bimetall-Schalters kommt, was den Vorteil hat, daß die Kaffeemaschine oder dergleichen bereits innerhalb von wenigen Sekunden erneut in Betrieb genommen werden kann.

Aufgrund der Weiterbildung gemäß Anspruch 19 ergibt sich mit Vorteil eine Selbsthaltefunktion der neuerungsgemäßen Temperaturregelvorrichtung, da beim Erreichen einer bestimmten Temperatur, beispielsweise der Warmhalteplatte einer Kaffeemaschine, der Bimetall-Schalter anspricht und öffnet, während gleichzeitig der den Bi metall-Schalter überbrückende Schichtwiderstand bestromt wird und damit zu einer entsprechenden "Ersatz-Heizung" führt, derart, daß im Endeffekt die gesamte Heizvorrichtung mit Temperaturregelvorrichtung abgeschaltet wird und auch abgeschaltet bleibt, ohne daß eine Bedienungsperson manuell eingreifen muß.

Eine derartige Wirkung ist insbesondere im Falle der Anwendung der neuerungsgemäßen Temperaturregelvorrichtung bei Kaffeemaschinen mit einer Thermoskanne von großem Vorteil, da nach dem Verkochen des Wassers die Heizung für die Durchlauferhitzerschlange und damit auch für die Warmhalteplatte automatisch abgeschaltet wird und bleibt, weil nunmehr von dem jetzt bestromten Schichtwiderstand ausgehend eine Wärmeleitung in das Basisteil der Temperaturregelvorrichtung hinein erfolgt und der Bimetall Schalter infolgedessen in seiner geöffneten Stellung gehalten wird. Soll dann die Kaffeemaschine erneut in Betrieb genommen werden, so kann dies einfach durch Abschaltung des Hauptschalters oder durch Ziehen des Netzsteckers erfolgen, wodurch, wie bereits weiter oben erläutert, die - selbstverständlich erneut befüllte - Kaffeemaschine nach wenigen Sekunden nach ihrer Abschaltung wieder eingeschaltet werden und ein erneuter Kochvorgang beginnen kann.

Gemäß weiterer Ausgestaltung der erfindungsgemäßen Vorrichtung ist vorgesehen, daß die Trägerplatte mit dem Schichtwiderstand in der Weise an dem Isolierstoffkörper des Basisteils angeordnet ist, daß der Schichtwiderstand einer Oberfläche des Isolierstoffkörpers zugekehrt ist und dieser Oberfläche mit relativ geringem Abstand gegenüberliegt.

Für die Halterung der Trägerplatte an dem Isolierstoffkörper erweist sich eine konstruktive Ausgestaltung als besonders günstig, gemäß der das wärmeleitfähige Basisteil der Temperaturregelvorrichtung eine im wesentlichen rechtwinklig abgebogene Haltezunge aufweist, die - wie bereits weiter oben erwähnt - mit dem Basisteil einstückig verbunden ist und die ferner an der dem Schichtwiderstand abgewendeten Oberfläche der Trägerplatte berührungsdicht anliegt.

Die Erfindung ist anhand vorteilhafter Ausführungsbeispiele in den Zeichnungsfiguren näher erläutert.

Diese zeigen:

Fig. 1 eine schematische Draufsicht auf einen Sockel einer Temperaturregelvorrichtung, und zwar zunächst noch ohne zugehöriges Basisteil und ohne Zusatzheizwiderstand;

Fig. 2 eine schematische Draufsicht auf ein Basisteil für die Temperaturregelvorrichtung gemäß Fig. 1;

Fig. 3 in schematischer Seitenansicht den Sockel der Temperaturregelvorrichtung gemäß Fig. 1, wobei dieser Sockel nunmehr auf dem Basisteil gemäß Fig. 2 angeordnet ist;

Fig. 4 eine schematische Draufsicht auf eine Trägerplatte für einen als Schichtwiderstand ausgebildeten Zusatzheizwiderstand für die Temperaturregelvorrichtung gemäß Fig. 1, wobei mit dieser Trägerplatte seitlich jeweils Kontaktfahnen verbunden sind;

Fig. 5 eine gegenüber der Fig. 4 vergrößerte Darstellung der Trägerplatte für sich allein;

Fig. 6 eine gegenüber der Fig. 4 um 90° gedrehte Ansicht auf die Trägerplatte mit ihren Kontaktfahnen;

Fig. 7 eine schematische Draufsicht auf eine vollständige Temperaturregelvorrichtung, die nunmehr auch den Zusatzheizwiderstand enthält;

Fig. 8 schematische Seitenansicht der kompletten Temperaturregelvorrichtung gemäß Fig. 7;

Fig. 9 eine der Fig. 7 entsprechende Draufsicht auf eine Temperaturregelvorrichtung, die jedoch gegenüber dem Ausführungsbeispiel nach Fig. 7 abgewandelt ist;

Fig. 10 ein erfindungsgemäßes Bauteil, welches als Zusatzheizwiderstand Verwendung finden kann, in Draufsicht;

Fig. 11 das Bauteil gemäß Fig. 10 in Seitenansicht; sowie

Fig. 12 das Bauteil gemäß den Fig. 10 und 11 in Verbindung mit einem Sockel zur Bildung einer Temperaturregelvorrichtung.

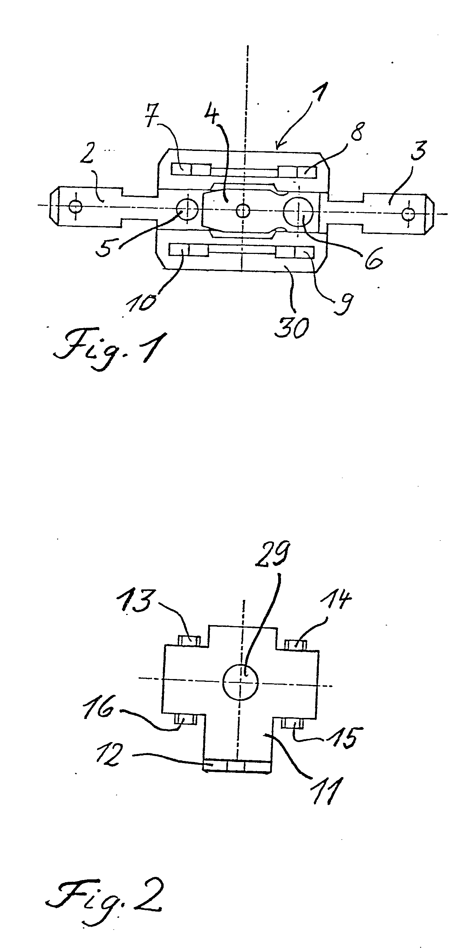

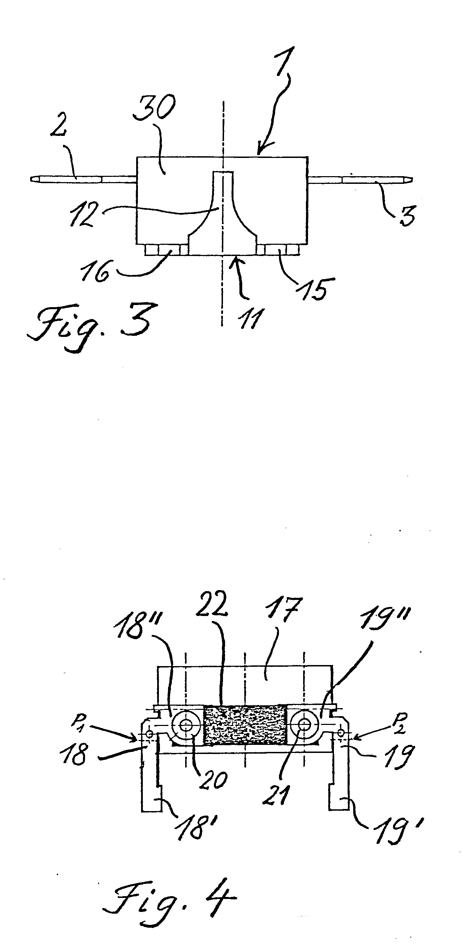

Gemäß Figuren 1 und 3 besteht eine allgemein mit 1 bezeichnete Temperaturregelvorrichtung im wesentlichen aus einem Sockel, der durch einen Isolierstoffkörper 30 gebildet ist, auf dem ein erstes elektrisches Anschlußelement 2 mittels eines Nietes 5 sowie ein zweites elektrisches Anschlußelement 3 mittels eines Nietes 6 befestigt sind.

Mittels dieses Nietes 6 ist an dem Anschlußelement 3 aber auch das Festende einer Kontaktfeder 4 befestigt, deren von dem Niet 6 abliegendes, freies bewegliches Ende mit einem Festkontakt des Anschlußelementes 2 zusammenwirkt. Dieser Festkontakt ist in der Fig. 1 nicht zu sehen, da er von dem freien beweglichen Ende der Kontaktfeder 4 überdeckt ist.

Der Isolierstoffkörper 30 ist ferner mit einer Anzahl von durchgehenden Ausnehmungen 7, 8 , 9 und 10 versehen, deren Zweck noch weiter unten erläutert wird.

Darüber hinaus weist die Temperaturregelvorrichtung 1 noch weitere Komponenten auf, die in der Fig. 1 im Einzelnen nicht dargestellt sind, und zwar handelt es sich bei diesen Elementen im wesentlichen um eine Bimetallsprungscheibe sowie einen von dieser betätigten, beweglichen Betätigungsstift, durch den die Kontaktfeder 4 beaufschlagt wird. Diese Kontaktfeder 4 stellt also praktisch den in den Strompfad eines Heizelementes, dessen Temperatur geregelt werden soll, einschaltbaren und in Abhängigkeit von der Temperatur betätigbaren Schaltkontakt dar.

Ein Temperaturregler mit temperaturabhängig betätigbarem Bimetall-Schalter ist an sich bekannt.

Die Temperaturregelvorrichtung 1 wird somit über ihre beiden Anschlußelemente 2 und 3 in einen Verbraucherstromkreis gelegt.

Fig. 3 zeigt nun eine Draufsicht auf ein Basisteil 11, das aus einem gut wärmeleitfähigen Material besteht und dazu dient, den Isolierstoffkörper 30 zu tragen, wodurch der komplette Sockel der Temperaturregelvorrichtung 1 gebildet ist.

Das Basisteil 11 weist an einander gegenüberliegenden äußeren Kanten insgesamt vier Einstecklappen 13, 14, 15 und 16 auf, die jeweils vom Basisteil 11 rechtwinklig abgewinkelt sind - und somit gemäß Fig. 2 jeweils senkrecht zur Papierebene stehen -, wobei diese Einstecklappen 13 - 16 in die Ausnehmungen 7 - 10 des Isolierstoffkörpers 30 einsteckbar sind.

Weiterhin ist das Basisteil 11 mit einer mittleren Öffnung 29 versehen, welche beispielsweise zur Anordnung einer Befestigungsschraube dient, mittels derer der Sockel der Temperaturregelvorrichtung 1 etwa an einer Heizvorrichtung beispielsweise unterhalb einer Warmhalteplatte einer Kaffeemaschine befestigt werden kann.

Darüber hinaus ist an dem Basisteil 11 an einer weiteren Seitenkante noch ein Halteelement oder eine Haltezunge 12 angeformt, die ebenfalls rechtwinklig vom Basisteil 11 abgewinkelt ist und somit ebenfalls senkrecht zur Papierebene gemäß Fig. 2 verläuft. Die Gestalt dieser Haltezunge 11 ist aus der seitlichen Ansicht der Temperaturregelvorrichtung 1 gemäß Fig. 3 deutlicher zu erkennen. In der Darstellung gemäß Fig. 3 ist der Isolierstoffkörper 30 auf dem Basisteil 11 angeordnet, wobei also die Einstecklappen 13 - 16 des Basisteils 11 in die entsprechend zugeordneten Ausnehmungen 7 - 10 des Isolierstoffkörpers 30 eingesetzt sind. Die somit zu einer Seitenfläche des Isolierstoffkörpers 30 parallel ausgerichtete Haltezunge, die mit einem geringen vorgegebenen Abstand dieser Isolierstoffkörperoberfläche gegenüberliegt, dient zum Haltern einer an dem Isolierstoffkörper 30 anzuordnenden Trägerplatte 17 mit auf dieser aufgebrachtem Zusatzheizwidestand, wie dies im einzelnen aus der Fig. 4 ersichtlich ist.

Fig. 4 zeigt ein derartiges Bauteil in schematischer Draufsicht, welches eine z. B. aus Aluminiumoxid bestehende Trägerplatte 17 aufweist, auf deren Oberfläche ein Schichtwiderstand 22 aufgedruckt ist, der den Zusatzheizwiderstand für die Temperaturregelvorrichtung 1 bildet. Die Trägerplatte 17 ist ferner an einander gegenüberliegenden Endabschnitten jeweils mit Kontaktfahnen 18 und 19 verbunden, welche dazu dienen, den Schichtwiderstand 22 zu den beiden Anschlußelementen 2 und 3 der Temperaturregelvorrichtung gemäß Fig. 1 parallel zu schalten.

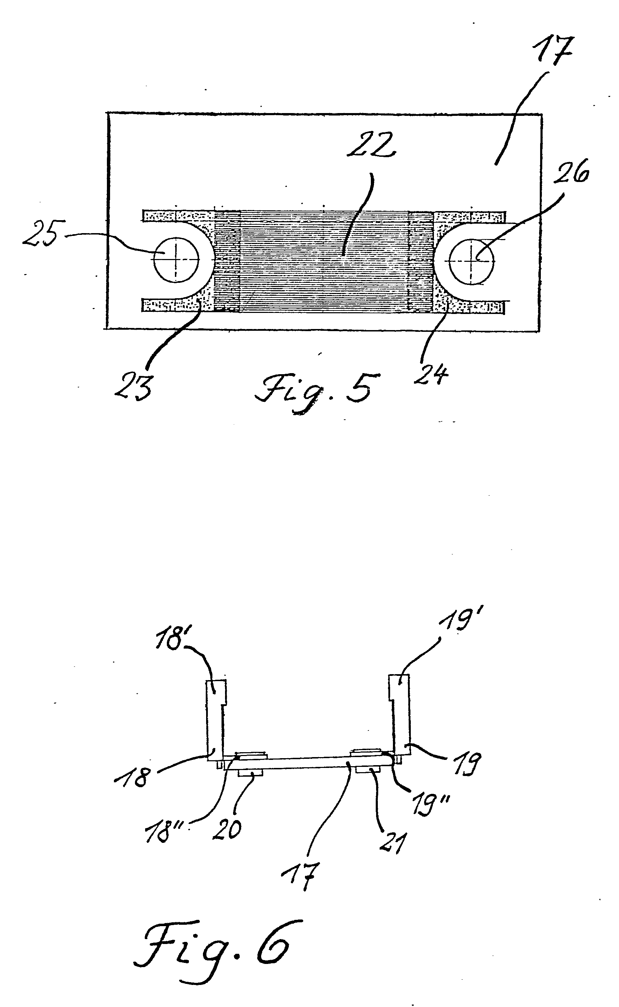

Die Anordnung dieses Schichtwiderstandes 22 mit z. B. 5 kΩ auf seiner zugehörigen Trägerplatte 17 ist im Detail aus der Fig. 5 zu ersehen, aus welcher deutlich wird, daß dieser Schichtwiderstand 22 jeweils mit endseitigen Kontaktflächen 23 und 24, beispielsweise aus Silber-Paladium (AgPd) versehen ist, die zur Kontaktgabe mit den Kontaktfahnen 18 und 19 gemäß Fig. 4 dienen. Zu diesem Zweck weisen die Kontaktfahnen 18 und 19 jeweils Befestigungsabschnitte 18″ und 19″ auf, die im Bereich der Kontaktflächen 23 und 24 des Schichtwiderstands 22 durch Niete 20 und 21 mit der entsprechende Löcher 25 und 26 aufweisenden Trägerplatte 17 verbunden sind (vgl. Fig. 4).

In Wirklichkeit sind, wie dies in Fig. 4 nicht genauso dargestellt ist, die Kontaktfahnen 18 und 19 im Bereich gegenüberliegender Seitenkanten der Trägerplatte 17 im wesentlichen rechtwinklig von ihren jeweiligen Befestigungsabschnitten 18″ und 19″ ausgehend abgebogen, verlaufen also tatsächlich in einer zur Zeichnungsebene gemäß Fig. 4 senkrechten Richtung. Die Abbiegungslinien der Kontaktfahnen 18 und 19 sind in der Fig. 4 jeweils durch gestrichelte Linien angedeutet, auf welche die Pfeile $P_1$ und $P_2$ hinweisen.

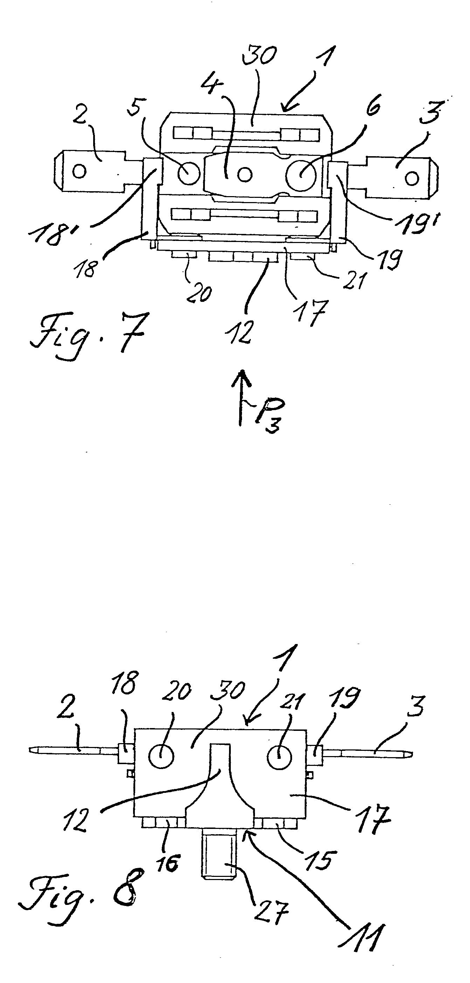

Die Fig. 6 zeigt eine Ansicht der Trägerplatte 17 in einer Stellung, die gegenüber derjenigen gemäß Fig. 4 um 90° verschwenkt ist.

Nach Fig. 6 steht somit die Trägerplatte 17 senkrecht zur Zeichnungsebene, wobei in dieser Darstellung die Kontaktfahnen 18 und 19 tatsächlich im wesentlichen rechtwinklig von der Trägerplatte 17 ausgehend abgebogen sind und somit parallel zur Zeichnungsebene verlaufen. Fig. 6 zeigt nochmals, daß die beiden einander gegenüberliegenden Kontaktfahnen 18 und 19 jeweils mittels mit ihnen verbundenen Befestigungsabschnitten 18″ und 19″ sowie mittels zugeordneter Niete 20 und 21 an der Trägerplatte 17 befestigt sind.

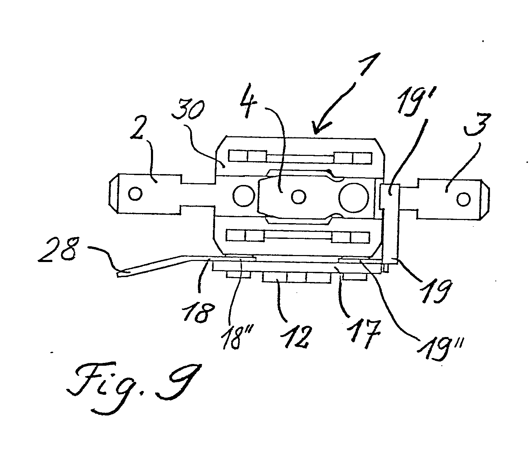

Ferner weisen die Kontaktfahnen 18 und 19 jeweils freie Enden 18′ und 19′ auf, welche dazu dienen, mit den Anschlußelementen 2 und 3 der Temperaturregelvorrichtung 1 in Kontakt gebracht zu werden, wie dies genauer die Fig. 7 zeigt.

In Fig. 7 ist eine komplette Temperaturregelvorrichtung 1 dargestellt, die nunmehr aus dem anhand der Fig. 1 erläuterten Sockel bzw. Isolierstoffkörper 30 mit Anschlußelementen usw. dem in Fig. 2 dargestellten Basisteil 11 sowie aus der Trägerplatte 17 gemäß Fig. 4 und 6 mit den mit ihr verbundenen Anschlußfahnen 18 und 19 zusammengesetzt ist.

Aus der Draufsicht gemäß Fig. 7 ist also zu erkennen, daß die freien Enden 18′ und 19′ der beiden Kontaktfahnen 18 und 19 auf den Anschlußelementen 2 und 3 berührungsdicht aufliegen, so daß also eine Parallelschaltung des auf der Trägerplatte 17 aufgebrachten Schichtwiderstandes 22 zu den Anschlußelementen 2 und 3 vorliegt. Die Trägerplatte 17 befindet sich hierbei in dem Zwischenraum zwischen einer seitlichen Fläche des Isolierstoffkörpers 30 und der mit dem Basisteil 11 einstückig verbundenen Haltezunge 12 und wird somit durch diese Haltezunge 12 am Sockel der Temperaturregelvorrichtung 1 gehaltert.

Fig. 8 zeigt eine Seitenansicht der Temperaturregelvorrichtung 1 in Richtung des Pfeiles $P_3$ gemäß Fig. 7. Aus Fig. 8 ist noch zu erkennen, daß das Basisteil 11 mit einer Halterungsschraube 27 verbunden ist, mittels derer die komplette Temperaturregelvorrichtung 1 mit einem zugehörigen Gerät, z. B. an einer Heizvorrichtung für die Warmhalteplatte einer Kaffeemaschine, befestigt werden kann. Aufgrund der Ausbildung der Temperaturregelvorrichtung 1 gemäß Fig. 7 und 8 übt der Zusatzheizwiderstand in Form des Schichtwiderstandes 22 eine Selbsthaltefunktion aus, da durch dessen Parallelschaltung, wie erläutert, es zu einer Überbrückung des Bimetall-Schalters der Temperaturregelvorrichtung 1 kommt, wenn dieser der Schalter beim Hochlaufen der Temperatur öffnet. Dieser geöffnete Zustand bleibt erhalten, da nunmehr die vom Zusatzheizwiderstand abgegebene Wärme unmittelbar über die Trägerplatte 17 und die Haltezunge 12 in das Basisteil 11 der Temperaturregelvorrichtung 1 hineingeleitet wird, so daß also der Bimetall-Schalter bzw. dessen Bimetallschnappschalter nicht mehr von der Warmhalteplatte aus, sondern von dem Zusatzheizwiderstand aus erwärmt wird. Wird jedoch die Kaffeemaschine oder dergleichen durch Ziehen des Netzsteckers oder durch Abschaltung des Hauptschalters ausgeschaltet, dann kühlt sich der Schichtwiderstand 22 schnell wieder ab, beispielsweise innerhalb von einigen Sekunden, so daß das elektrische Hausgerät, z. B. die Kaffeemaschine, nach einer entsprechend kurzen Zeit wieder betriebsbereit ist.

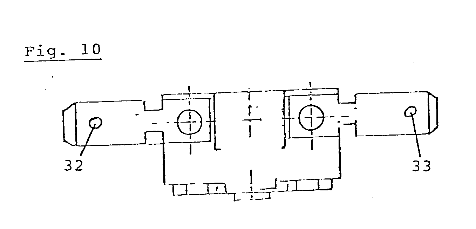

Fig. 9 schließlich zeigt noch eine gegenüber der Ausführung nach Fig. 7 abgewandelte Ausführungsform der Temperaturregelvorrichtung 1, bei der jetzt nur noch eine Kontaktfahne 19 der Trägerplatte 17 im wesentlichen rechtwinklig von ihrem Befestigungsabschnitt 19″ ausgehend abgebogen ist und mit ihrem freien Ende 19′ an dem einen Anschlußelement 3 berührungsdicht anliegt. Dagegen ist nunmehr die zweite gegenüberliegende Kontaktfahne 18 von ihrem Befestigungsabschnitt 18″ aus gehend von der Temperaturregelvorrichtung 1 wegführend ausgerichtet. Hierbei weist die Kontaktfahne 18 ein freies Ende 28 auf, das zum Anschluß an einen in einem abgezweigten Stromkreis liegenden, manuell betätigbaren Schalter dient, der im einzelnen nicht dargestellt ist. Mit Hilfe eines derartigen Schalters läßt sich die zusätzliche, vom Schichtwiderstand 22 bewirkte Heizung durch eine Bedienungsperson ein- oder ausschalten, was also eine praktisch manuelle Beeinflussbarkeit der Temperaturregelvorrichtung 1 bedeutet.

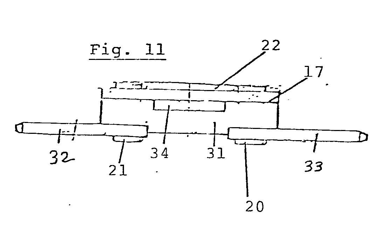

Die Fig. 10 und 11 zeigen eine Ausgestaltung des selbständig beanspruchten erfindungsgemäßen Bauteils, insbesondere ebenfalls für den Einsatz als Heizwiderstand geeignet. Wie am besten aus Fig. 11 zu ersehen ist, besteht das Bauteil aus einer schichtenförmigen Anordnung aus einer Trägerplatte 17, auf welcher ein Schichtwiderstand 22 durch ein Druckverfahren (beispielsweise Siebdruckverfahren) aufgebracht ist. In direktem Kontakt mit der Trägerplatte 17 steht eine Isolierstoffschicht 31, welche ein im Vergleich zur Trägerplatte 17 größeres Massevolumen besitzt. Die Isolierstoffschicht 31 besteht aus einem keramischen Material. An der der Trägerplatte 17 gegenüberliegenden Seite der Isolierstoffschicht 31 befinden sich zwei Anschlußelemente 32 und 33, über die das Bauteil mit Strom versorgt werden kann.

Trägerplatte 17, Isolierstoffschicht 31 sowie Anschlußelemente 32 und 33 sind über Niete 21 sowie 22 miteinander fest verbunden.

Die Trägerplatte 17 ist im Bereich der Niete 21 und 22 mit Kontaktflächen 23 und 24 (vgl. Fig. 5) versehen, womit gewährleistet wird, daß der Schichtwiderstand 22 in elektrischem Kontakt zum Niet 21 bzw. 22 steht. Damit gewährleisten die Niete 21 und 22 einen Stromfluß von Anschlußelement 32, Niet 21, Kontaktfläche 23, Schichtwiderstand 22, Kontaktfläche 24, Niet 22 sowie Anschlußelement 33.

Zwischen der Isolierstoffschicht 31 sowie der Trägerplatte 17 ist eine schlitzförmige Ausnehmung 34 in mittiger Anordnung vorgesehen.

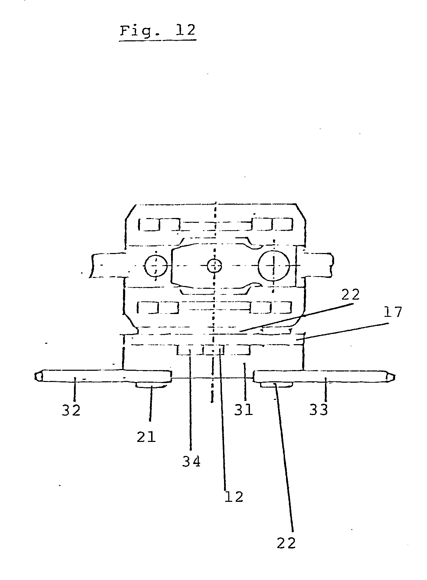

Wie aus Fig. 12 zu erkennen ist, greift die Haltezunge 12 der Temperaturregelvorrichtung 1 in die Ausnehmung 34 des Bauteils ein, wodurch einerseits ein Halteeffekt zwischen den beiden Bauteilen sowie andererseits eine gute Wärmekopplung aufgrund der aus gut wärmeleitfähigem Material bestehenden Haltezunge 12 gewährleistet wird. Zur Verbindung des Bauteils mit der Temperaturregelvorrichtung 1 wird das Bauteil in einfacher Weise auf die Haltezunge 12 aufgeschoben. Die den Schichtwiderstand 22 tragende Trägerplatte 17 befindet sich hierbei in einem geringen, durch die Oberseiten der Niete 21 sowie 22 bedingten Abstand von der Temperaturregelvorrichtung.

BEZUGSZEICHENLISTE

1 Temperaturregelvorrichtung

2 Anschlußelement (für Festkontakt)
3 Anschlußelement (für Kontaktfeder)
4 Kontaktfeder
5 Niet
6 Niet
7 Ausnehmung
8 Ausnehmung
9 Ausnehmung
10 Ausnehmung
11 Basisteil
12 Haltezunge
13 Einstecklappen (von 11 abgewinkelt)
14 Einstecklappen (von 11 abgewinkelt)
15 Einstecklappen (von 11 abgewinkelt)
16 Einstecklappen (von 11 abgewinkelt)
17 Trägerplatte
18 Kontaktfahne
18' freies Ende (von 18)
18" Befestigungsabschnitt (von 18)
19 Kontaktfahne
19' freies Ende (von 19)
19" Befestigungsabschnitt (von 19)
20 Niet
21 Niet
22 Schichtwiderstand
23 Kontaktfläche
24 Kontaktfläche
25 Loch
26 Loch
27 Halterungsschraube
28 freies Ende
29 Öffnung
30 Isolierstoffkörper
31 Isolierstoffschicht
32 Anschlußelement
33 Anschlußelement
34 schlitzförmige Ausnehmung

**Ansprüche**

1. Bauteil insbesondere für den Einsatz als Heizwiderstand mit
- einer Trägerplatte (17),
- einem auf dieser Trägerplatte (17) aufgebrachten Schichtwiderstand (22),
- Anschlußelementen, welche mit dem Schichtwiderstand (22) in elektrischem Kontakt stehen,
- einer zusätzliche an der Trägerplatte (17) anliegende Isolierstoffschicht (31) zur thermischen Kapazitätserhöhung

2. Bauteil nach Anspruch 1,
dadurch gekennzeichnet,
daß die Isolierstoffschicht (31) ein im Vergleich zur Trägerplatte (17) größeres Massevolumen besitzt.

3. Bauteil nach Anspruch 1 oder 2,
dadurch gekennzeichnet,
daß die Isolierstoffschicht (31) aus einem keramischen Material besteht.

4. Bauteil nach mindestens einem der vorhergehenden Ansprüche,
dadurch gekennzeichnet,
daß die Trägerplatte (17), die Isolierstoffschicht (31) sowie die Anschlußelemente über ein gemeinsames Befestigungsmittel miteinander gehalten werden.

5. Bauteil nach Anspruch 4,
dadurch gekennzeichnet,
daß als Befestigungsmittel zwei Niete (20, 21) vorgesehen sind, welche die Anordnung von Trägerplatte (17), Isolierstoffschicht (31) sowie Anschlußelemente durchsetzen.

6. Bauteil nach mindestens einem der vorhergehenden Ansprüche,
dadurch gekennzeichnet,
daß eine Aufnahmeeinrichtung zur Aufnahme metallischer Wärmeübertragungselemente benachbarter Bauelemente vorgesehen ist.

7. Bauteil nach Anspruch 6,
dadurch gekennzeichnet,
daß die Aufnahmeeinrichtung innerhalb des aus Trägerplatte (17) und Isolierstoffschicht (31) bestehenden Paketes angeordnet ist.

8. Bauteil nach Anspruch 7,
dadurch gekennzeichnet,
daß die Aufnahmeeinrichtung eine schlitzförmige Ausnehmung (34) an der Berührungsfläche von Trägerplatte (17) und Isolierstoffschicht (31) ist, die insbesondere in die Isolierstoffschicht (31) hineinverläuft.

9. Bauteil nach mindestens einem der vorhergehenden Ansprüche,
dadurch gekennzeichnet,
daß die Trägerplatte (17) aus Keramik, insbesondere $Al_2O_3$ besteht.

10. Bauteil nach mindestens einem der vorhergehenden Ansprüche,
dadurch gekennzeichnet,
daß der Schichtwiderstand (22) auf einer Oberfläche der Trägerplatte (17) als Flächenwiderstand aufgedruckt ist.

11. Bauteil nach mindestens einem der vorhergehenden Ansprüche,
dadurch gekennzeichnet,
daß der Schichtwiderstand (22) bzw. der Flächenwiderstand jeweils mit endseitigen Kontaktflächen (23, 24) zur Kontaktgabe mit als Kontaktfahnen (18, 19) ausgebildeten Anschlußelementen versehen ist.

12. Bauteil nach mindestens einem der vorhergehenden Ansprüche,
dadurch gekennzeichnet,
daß die Kontaktflächen (23, 24) aus Silber-Paladium (AgPd) bestehen.

13. Bauteil nach mindestens einem der vorhergehenden Ansprüche,
dadurch gekennzeichnet,

daß die Kontaktfahnen (18, 19) jeweils Befestigungsabschnitte (18″, 19″) aufweisen, die im Bereich der Kontaktflächen (23, 24) des Schichtwiderstandes (22) durch Niete (20, 21) mit der Trägerplatte (17) verbunden sind.

14. Bauteil nach Anspruch 13,
dadurch gekennzeichnet,
daß die Kontaktfahnen (18, 19) im Bereich gegenüberliegender Seitenkanten der Trägerplatte (17) i. w. rechtwinklig von ihren jeweiligen Befestigungsabschnitten (18″, 19″) ausgehend abgebogen sind und mit ihren freien Enden (18′, 19′) an den Anschlußelementen (2, 3) einer Temperaturregelvorrichtung (1) berührungsdicht anliegen.

15. Bauteil nach Anspruch 13,
dadurch gekennzeichnet,
daß nur eine Kontaktfahne (19) der Trägerplatte (17) i. w. rechtwinklig von ihrem Befestigungsabschnitt (19″) ausgehend an einem Anschlußelement (3) einer Temperaturregelvorrichtung (1) berührungsdicht anliegt, während die andere, gegenüberliegende Kontaktfahne (18) von ihrem Befestigungsabschnitt (18″) ausgehend eine von der Temperaturregelvorrichtung (1) wegführende Ausrichtung mit einem freien Ende (29) zum Anschluß an einen im abgezweigten Stromkreis liegenden, manuell betätigbaren Schalter aufweist.

16. Temperaturregelvorrichtung mit einem an einem Isolierstoffkörper angeordneten, temperaturabhängig betätigbaren Bimetall-Schalter und einem Zusatzheizwiderstand, insbesondere für elektrische Hausgeräte, zum Beispiel für Warmhalteplatten von Kaffeemaschinen o. dgl.,
dadurch gekennzeichnet,
daß der Zusatzheizwiderstand als ein auf einer Trägerplatte (17) aufgebrachter Schichtwiderstand (22) ausgebildet ist und daß die Trägerplatte (17) an dem Isolierstoffkörper (30) angeordnet und mittels eines mit einem wärmeleitfähigen Basisteil (11) der Temperaturregelvorrichtung (1) einstückig verbundenen Halteelements (12) gehaltert ist.

17. Temperaturregelvorrichtung nach Anspruch 16,
dadurch gekennzeichnet,
daß als Zusatzheizwiderstand ein Bauteil nach mindestens einem der Ansprüche 1 - 15 vorgesehen ist.

18. Vorrichtung nach Anspruch 16 oder 17,
dadurch gekennzeichnet,
daß der Schichtwiderstand (22) durch mit der Trägerplatte (17) verbundene Anschlußelemente oder Kontaktfahnen (18, 19) zu Anschlußelementen (2, 3) der Temperaturregelvorrichtung (1) parallelgeschaltet ist.

19. Vorrichtung nach Ansprüchen 16 - 18,
dadurch gekennzeichnet,
daß die Trägerplatte (17) in der Weise am Isolierstoffkörper (30) des Basisteils (11) angeordnet ist, daß der Schichtwiderstand (22) einer Oberfläche des Isolierstoffkörpers (30) zugekehrt ist und dieser Oberfläche direkt oder zumindest mit relativ geringem Abstand gegenüberliegt.

20. Vorrichtung nach einem der vorhergehenden Ansprüche,
dadurch gekennzeichnet,
daß das Basisteil (11) der Temperaturregelvorrichtung (1) eine i. w. rechtwinklig abgebogene Haltezunge (12) aufweist, die an der dem Schichtwiderstand (22) abgewendeten Oberfläche der Trägerplatte (17) berührungsdicht anliegt.

*Fig. 1*

*Fig. 2*

*Fig. 3*

*Fig. 4*

Fig. 5

Fig. 6

Fig. 7

Fig. 8

Fig. 9

Fig. 10

32                                                                    33

Fig. 11

Fig. 12